# EUROPÄISCHE PATENTANMELDUNG

(11) **EP 1 553 106 A1**
(43) Veröffentlichungstag der Anmeldung: **13.07.2005**
(21) Anmeldenummer: 05000033.0
(22) Anmeldetag: 04.01.2005
(51) Int. Cl.: C08F 6/14, C08K 5/25, C08K 5/32, C08L 25/06, C08L 31/00

(54) **Herstellung von geruchsarmen Dispersionen**

(30) Priorität: 10.01.2004 DE 102004001537
(71) Anmelder: Polymer Latex GmbH & Co. KG, 45764 Marl (DE)
(72) Erfinder: Conrads, Martin, 47509 Rheurdt (DE); Dören, Klaus, 45770 Marl (DE); Scheuermann, Hubert, 45772 Marl (DE)
(74) Vertreter: Sternagel, Fleischer, Godemeyer & Partner Patentanwälte

(57) **Zusammenfassung**

Die Erfindung betrifft ein Verfahren zur Herstellung einer geruchsarmen Polymerdispersion durch Polymerisation von Monomeren, die Monomere enthalten, die keton- oder aldehydfunktionelle Geruchsträger unter den Polymerisationsbedingungen bilden, in einem wässrigen Medium, wobei vor, während oder nach Beendigung der Polymerisation ein Reagenz zufügt wird, welches mit den keton- oder aldehydfunktionellen Geruchsträgern zu Additions- oder Kondensationsprodukten reagiert, wobei das Reagenz, falls es vor oder während der Polymerisation zugegeben wird, so ausgewählt wird, dass es sich bezüglich der Polymerisation inert verhält. Weiterhin betrifft die Erfindung ein Verfahren zur Verringerung der Konzentration von keton- oder aldehydfunktionellen Geruchsträgern in wässrigen Polymerdispersionen, wobei einer wässrigen Polymerdispersion, die einen keton- oder aldehydfunktionellen Geruchsträger enthält, ein Reagenz zufügt wird, welches mit dem carbonylfunktionellen Geruchsträger zu Additions- oder Kondensationsprodukten reagiert, die nach diesen Verfahren erhältlichen geruchsarmen Polymerdispersionen, die die Additions- bzw. Kondensationsprodukte enthalten sowie die Verwendung dieser Dispersionen als Bindemittel.

## Beschreibung

### Gebiet der Erfindung:

Die Erfindung betrifft geruchsarme Polymerdispersionen, insbesondere geruchsarme, wässrige Dispersionen von Copolymeren mit Styrol als einer Monomerkomponente sowie Verfahren für deren Herstellung.

### Hintergrund der Erfindung:

Zur Reduzierung der Umweltbelastung und aus arbeitshygienischen Gründen ist es wünschenswert, dass Beschichtungsmassen, insbesondere solche, die in geschlossenen Räumen verwendet werden, wie beispielsweise Dispersionsfarben, Kunststoff-Dispersions-Putze oder Fliesenkleber keine nichtwässrigen, flüchtigen, organischen oder anorganischen Bestandteile an die Umgebung abgeben. Dies kann im Prinzip teilweise dadurch erreicht werden, dass man als Bindemittel für diese Beschichtungssysteme wässrige Polymerdispersionen verwendet.

### Stand der Technik:

Wässrige Polymerdispersionen enthalten nach ihrer Herstellung durch radikalische Polymerisation oder Copolymerisation neben einem Polymer-Feststoffanteil von 30 bis 75 Gew.-% aufgrund einer unvollständigen Polymerisation der eingesetzten Monomere in der radikalischen Hauptpolymerisation, die meist zu einem Monomerumsatz von 95 und bevorzugt von 98 bis 99 Gew.-% geführt wird, noch einen unerwünschten Anteil an nichtpolymerisierten freien Monomeren ("Restmonomeren"). Aus toxikologischen und arbeitsplatzhygienischen Gründen fordert der Markt wässrige Polymersysteme mit einem niedrigen Gehalt an Restmonomeren bei gleichbleibenden Verarbeitungs- und Anwendungseigenschaften.

Neben nichtchemischen Methoden, wie Inertgas- oder Wasserdampfstrippung, stehen unterschiedlichste chemische Methoden, wie beispielsweise in EP-B 003957, EP-B 028348, EP-B 563726, EP-A 764699, US-A 4529753, DE-A 3718520, DE-A 3834734, DE-A 4232194, DE-A 19529599 beschrieben, zur Absenkung von Restmonomergehalten wässriger Polymerdispersionen zur Verfügung.

Weiterhin können in Abhängigkeit der eingesetzten Monomeren und Polymerisationsbedingungen in den wässrigen Polymerdispersionen unerwünschte Geruchsträger, insbesondere keton- oder aldehydfunktionelle Geruchsträger, auftreten. So entsteht z.B. bei der Polymerisation von styrolhaltigen Monomermischungen, wie sie beispielsweise zur Herstellung der Polymerdispersion für die Bau- und Klebstoffindustrie verwendet werden, zwangsläufig immer eine gewisse Menge an Benzaldehyd (ca. 100-200 ppm). Es ist bekannt, diesen Geruchsträger während des Strippprozesses im Verdampfer abzutrennen. Die Menge an Benzaldehyd ist aufgrund des Dampfdrucks des Benzaldehyds bestimmend für die Verweilzeit im Verdampfer und damit für die Kosten der Abtrennung. Hierbei nimmt insbesondere der Verbrauch an Wasser, Dampf und Energie zu. Mit zunehmendem Wasser- und Dampfverbrauch steigt zudem die zu entsorgende Abwassermenge.

Bisherige Versuche, den Gehalt an Benzaldehyd durch Variationen der Herstellungsbedingungen auf ein akzeptables Maß zu reduzieren, waren nicht erfolgreich.

EP A 563 726 beschreibt ein Verfahren zur Verminderung des Restmonomerengehalts in wässrigen Polymerdispersionen auf Polyvinylesterbasis, bei dem das unerwünscht auftretende Nebenprodukt Acetaldehyd destillativ entfernt wird.

Die konventionellen Methoden Begleitstoffe physikalisch zu entfernen, sind zeit- und kostenintensiv. Insbesondere wird zu deren Durchführung ein erheblicher technologischer Aufwand wie z. B. Errichtung einer Entgasungsanlage, Dampfstripper oder Verdampfer benötigt. Diese Verfahren sind zudem sehr energieintensiv und belasten die Dispersionen, was wiederum zu Abscheidungen und Koagulat führt. Der Reinigungsaufwand der Entgasungsanlagen ist somit erheblich.

Verbunden mit den konventionellen Verfahren ist daher auch eine erhebliche Umweltbelastung in Form von Energie und Abwasser.

Es bestand also die Aufgabe, ein Verfahren zur Verfügung zu stellen, das die oben beschriebenen Nachteile vermeidet, insbesondere das die Herstellung von geruchsarmen Dispersionen ohne energie- und zeitintensive Trennoperationen ermöglicht.

### Zusammenfassung der Erfindung:

Diese Aufgabe wird gelöst durch ein Verfahren zur Herstellung einer geruchsarmen Polymerdispersion durch Polymerisation von Monomeren, die Monomere enthalten, die keton- oder aldehydfunktionelle Geruchsträger unter den Polymerisationsbedingungen bilden, in einem wässrigen Medium, wobei vor, während oder nach Beendigung der Polymerisation ein Reagenz zugefügt wird, welches mit den keton- oder aldehydfunktionellen Geruchsträgern zu Additions- oder Kondensationsprodukten reagiert, wobei das Reagenz, falls es vor oder während der Polymerisation zugegeben wird, so ausgewählt wird, dass es sich bezüglich der Polymerisation inert verhält.

Gemäß einer zweiten Ausführungsform der vorliegenden Erfindung wird diese Aufgabe durch ein Verfahren zur Verringerung der Konzentration von keton- oder aldehydfunktionellen Geruchsträgern in Polymerdispersionen gelöst, wobei einer wässrigen Polymerdispersion, die einen keton- oder aldehydfunktionellen Geruchsträger enthält, ein Reagenz zugefügt wird, welches mit dem keton- oder aldehydfunktionellen Geruchsträger zu Additions- oder Kondensationsprodukten reagiert.

### Beschreibung der Erfindung:

Es wurde nun überraschend gefunden, dass die Verringerung der Konzentration von keton- oder aldehydfunktionellen Geruchsträgern in Polymerdispersionen einfach und sicher durch Zugabe eines Reagenz erfolgen kann, das mit den keton- oder aldehydfunktionellen Geruchsträger zu Additions- oder Kondensationsprodukten reagiert. Besonders vorteilhaft ist dabei, dass die entstehenden Additions- bzw. Kondensationsprodukte das gewünschte Eigenschaftsprofil der Polymerdispersionen nicht beeinträchtigten und sie daher nicht abgetrennt werden müssen. Die geruchsarme, wässrige Polymerdispersion, die diese Additions- bzw. Kondensationsprodukte enthält, kann daher ohne Abtrennung der Reaktionsprodukte als Bindemittel in Farben, Putzen, Mörteln, Fliesen- und Fußbodenklebern und Beschichtungen verwendet werden. Die geruchsarmen Polymerdispersionen, die diese Additions- bzw. Kondensationsprodukte enthalten, sind daher ebenfalls Gegenstand der vorliegenden Erfindung.

Obwohl die vorliegende Erfindung bei allen Polymerisationssystemen eingesetzt werden kann, bei denen unerwünschte keton- oder aldehydfunktionelle Nebenprodukte auftreten, wird im Folgenden die Erfindung an Hand der Entfernung von Benzaldehyd aus Dispersionen von Copolymeren auf Styrolbasis erläutert. Die mit Bezugnahme auf die Entfernung von Benzaldehyd offenbarten Verfahrensparameter, wie auch die beschriebenen Reagenzien können in gleicher Weise auch für die Entfernung anderer keton- oder carbonylfunktioneller Geruchsträger verwendet werden.

Die Herstellung der Emulsionspolymerisate kann in an sich bekannter Weise erfolgen. Als Emulgatoren können bei der Emulsionspolymerisation z. B. Alkalisalze von Alkylsulfaten, Al kyl sul fonaten, alkylierten Arylsulfonaten oder Sulfosuccinate alleine oder in Kombination mit Fettalkoholethoxylaten oder Alkylarylphenolethoxylaten verwendet werden. Als Initiatoren können z. B. übliche wasserlösliche, thermisch zerfallende Initiatoren wie Natrium-, Kalium-, Ammoniumperoxodisulfat oder Redoxinitiatoren wie z. B. Natriumperoxodisulfat/Natriumbisulfit eingesetzt werden. Die Emulsionspolymerisation kann bei Temperaturen zwischen 30°C und 95°C durchgeführt werden.

Die als Initiatoren verwandten Peroxodisulfate zerfallen thermisch in die entsprechenden Radikale, die die gewünschte Polymerisationsreaktion der Monomere starten. Gleichzeitig wirken die Peroxodisulfate bzw. ihre Zerfallsprodukte (vgl. Kalthoff, I. M. and I. K. Miller, "The Chemistry of Persulfate", J. Amer. Chem. Soc. 73, 3055-3059 (1951)) als Oxidationsmittel, die in einer Nebenreaktion z. B. Teile des eingesetzten Styrols über das Styrol-7,8-oxid zum Benzaldehyd oxidieren können.

Als Reagenzien zur Reduzierung des Benzaldehydgehalts der Polymerdispersion können alle chemischen Verbindungen eingesetzt werden, die mit Aldehyden Additions- oder Kondensationsreaktionen eingehen und zu inerten schwerflüchtigen Verbindungen reagieren. Als Verbindungen kommen Alkohole, insbesondere 1,2 disubstituierte Alkohole wie z. B. Glykol, Hydrazin und Hydrazinderivate wie z.B. 2,4 Dinitrophenylhydrazin oder Carbonsäurehydrazide, insbesondere Dicarbonsäurediyhdrazide in Frage, ferner Amine, Hydroxylamin oder Hydroxylaminderivate wie z.B. Salze des Hydroxylamins. Geeignete Amine sind aliphatische Amine, wie beispielsweise Methylamin.

Besonders bevorzugt ist das neutrale Sulfat des Hydroxylamins oder Adipinsäuredihydrazid.

Die Zugabe kann vor, während oder auch nach der Polymerisation erfolgen, wobei die Zugabe nach der Polymerisation bevorzugt wird.

Die Zugabe erfolgt portionsweise oder in einem Ansatz zur Dispersion. Die Temperatur der Dispersion liegt zwischen 20° C und 85° C, bevorzugt liegt die Temperatur zwischen 30° C und 60° C.

Der pH-Wert der Dispersion liegt zwischen 2 und 8, bevorzugt zwischen 6 und 8. Die Überschussmenge des eingesetzten Reagenz liegt zwischen 1,0 und 7 Mol, bezogen auf den zu entfernenden Benzaldehyd, bevorzugt zwischen 2 - 7 Mol an Überschuss.

Auch bei anderen Polymerisationsprozessen treten keton- oder aldehydfunktionelle Verunreinigungen auf. Bei der Polymerisation von Monomermischungen, die Ester des Vinylalkohols wie z. B. Acetat, Propionat oder Versatat enthalten, führt die teilweise Verseifung des Monomeren während der Polymerisationsreaktion zur Bildung von Acetaldehyd als Umlagerungsprodukt des instabilen Vinylalkohols. Diese Nebenreaktion tritt vor allem bei Vinylacetat- und Vinylproprionatmonomeren ein.

Alternativ wurde untersucht, ob die vorliegende Aufgabe auch durch oxidative Entfernung von Benzaldehyd gelöst werden kann. Bei der Oxidation von Benzaldehyd mit Luftsauerstoff zu Benzoesäure werden sehr lange Verweilzeiten bei höheren Temperaturen benötigt, was zu einer Schädigung der Polymerdispersion führt. Andere gängige Oxidationsmittel, wie sie u. a. in Houben-Weyll Bd. VIII, S. 411 oder in Organic Reactions 9, 73 (1957) genannt werden, sind z. B. Wasserstoffperoxid, organische und anorganische Peroxide, Peroxocarbonate und Peroxosulfate. Letztere führen zu einer erheblichen Salzbelastung der Dispersion und verschlechtern dadurch die Wasserempfindlichkeit daraus hergestellter Filme drastisch. Darüber hinaus führen Reste des Oxidationsmittels, das im Überschuß eingesetzt werden muss, zu Wechselwirkungen mit Bioziden oder Verarbeitungshilfsmitteln wie z. B. Celluloseverdickern, die der Dispersion zugesetzt werden.

Die vorliegende Erfindung wird nun an Hand von Ausführungsbeispielen näher erläutert.

### Referenzbeispiel 1 Herstellung einer Dispersion auf Basis Styrol/Butylacrylat

In einem 5 1 Reaktor wurden 772,5 g vollentsalztes Wasser und 8,929 g Emulsogen EPA 073 (Fa. Clariant) vorgelegt. Nach Erwärmen auf 85° C wurde eine Initiatorlösung bestehend aus 12,5 g Natriumperoxodisulfat in 257,5 g vollentsalztem Wasser zudosiert. Die Dosierdauer betrug 270 Minuten. 5 Minuten nach Beginn der Initiatordosierung bei 85° C wurde eine Emulsion aus 1225 g Styrol, 1225 g Butylacrylat, 50 g Acrylsäure, 133,9 g Emulsogen EPA 073 und 1268,3 g vollentsalztem Wasser zudosiert. Die Emulsion wurde durch Rühren in einem Ultra Turrax bei 10000 UPM hergestellt. Die Dosierrate der Emulsion betrug 16,3 g/Minute. Die Temperatur wurde über die gesamte Dosierzeit bei 85° C Reaktorinnentemperatur gehalten. Nach Zulaufen der Initiatordosierung wurden noch weitere 30 Minuten eine Reaktorinnentemperatur von 85° C eingehalten.

Nach dem Abkühlen wurde die Dispersion mit 10%iger Natronlauge auf einen pH-Wert von 7,5 eingestellt. Es wurde eine stabile Dispersion mit einem Feststoffgehalt von 49,7 %, einer Teilchengröße von 145 nm erhalten. Der berechnete Feststoffgehalt dieser Rezeptur lag bei 50 %. Nach Abkühlen wurde der Gehalt an Benzaldehyd durch Gaschromatographie bestimmt. Es wurden 130 ppm gefunden.

### Referenzbeispiel 2 Herstellung einer Dispersion auf Basis Styrol/2-Ethylhexylacrylat

In einem 5 1 Reaktor wurden 772,5 g vollentsalztes Wasser und 8,929 g Emulsogen EPA 073 (Fa. Clariant) vorgelegt. Nach Erwärmen auf 85° C wurde eine Initiatorlösung bestehend aus 12,5 g Natriumperoxodisulfat in 257,5 g vollentsalztem Wasser zudosiert. Die Dosierdauer betrug 270 Minuten. 5 Minuten nach Beginn der Initiatordosierung bei 85° C wurde eine Emulsion aus 1225 g Styrol, 1225 g 2-Ethylhexylacrylat, 50 g Acrylsäure, 133,9 g Emulsogen EPA 073 und 1268,3 g vollentsalztem Wasser zudosiert. Die Emulsion wurde durch Rühren in einem Ultra Turrax bei 10000 UPM hergestellt. Die Dosierrate der Emulsion betrug 16,3 g/Minute. Die Temperatur wurde über die gesamte Dosierzeit bei 85° C Reaktorinnentemperatur gehalten. Nach Ende der Initiatordosierung wurde noch weitere 30 Minuten eine Reaktorinnentemperatur von 85° C eingehalten.

Nach dem Abkühlen wurde die Dispersion mit 10%iger Natronlauge auf einen pH-Wert von 7,5 eingestellt. Es wurde eine stabile Dispersion mit einem Feststoffgehalt von 49,7 %, einer Teilchengröße von 155 nm erhalten. Der berechnete Feststoffgehalt dieser Rezeptur lag bei 50 %. Nach Abkühlen wurde der Gehalt an Benzaldehyd durch Gaschromatographie bestimmt. Es wurden 230 ppm gefunden.

Die Konzentration an Benzaldehyd lag bei beiden Dispersionen deutlich über der Geruchsschwelle von 50 ppm.

### Beispiel 1:

Zu den nach Referenzbeispiel 1 und 2 gefertigten Dispersionen (Dispersion 1 bzw. Dispersion 2) wurden 0,1 Gew.-% Hydroxylaminhydrochlorid (HAC) zugegeben. Die Zugabe des Hydroxylaminhydrochlorids erfolgt in Form einer 10 % (Gew.-%) Lösung des Salzes in vollentsalztem Wasser.

### Beispiel 2:

In einer 2. Versuchsreihe wurden den Dispersionen jeweils 0,1 % Adipinsäuredihydrazid (ADH) in Form einer 5%igen Lösung in vollentsalztem Wasser zugegeben.

### Vergleichsbeispiel 1:

Zum Vergleich wurde als typisches Oxidationsmittel Wasserstoffperoxid verwendet. Hier wurden den Dispersionen jeweils 0,2% Wasserstoffperoxid in Form einer 5%igen Lösung in vollentsalztem Wasser zugefügt.

### Beispiel 3: Verminderung des Gehalts an Benzaldehyd

24 h nach Zugabe der unterschiedlichen Nachbehandlungsmittel gemäß der Beispiele 1 und 2 und des Vergleichsbeispiels 1 bei Raumtemperatur wurde der Gehalt an Benzaldehyd durch GC-Analyse bestimmt. Die Ergebnisse sind in Tabelle 1 zusammengefasst.

**Tabelle 1:**

| Benzaldehydgehalte nach GC-Analyse | | |
|---|---|---|
| Additiv | Dispersion 1 | Dispersion 2 |
| ohne | 130 | 230 |
| 0,1% HAC | 10 | 30 |
| 0,1% ADH | 60 | 100 |
| 0,2% H₂O₂ | 130 | 230 |

Dies zeigt die gute Wirksamkeit im Vergleich zu einem Standardoxidationsmittel.

### Beispiel 4: Biozidstabilität

Zur Messung der Biozidstabilität wurden die Dispersionen mit den jeweiligen Additiven gemäß Beispiel 3 mit Methylisothiazolinon versetzt. Nach 24 Stunden wurde der Gehalt an Methylisothiazolinon durch HPLC bestimmt. Tabelle 2 gibt den Prozentsatz des Menge an Methylisothiazolinon bezogen auf die zugesetzte Menge an Methylisothiazolinon an. Bei der wasserstoffperoxidhaltigen Dispersion wurde innerhalb von 24 h ein 85%igen Abbau des Biozids festgestellt.

**Tabelle 2:**

| Wiederfindungsrate [%] von Methylisothiazolinon | | |
|---|---|---|
| Additiv | Dispersion 1 | Dispersion 2 |
| ohne | 100 | 100 |
| 0,1% HAC | 100 | 100 |
| 0,1% ADH | 100 | 100 |
| 0,2% H₂O₂ | 15 | < 7 |

### Beispiel 5: Cellulosestabilität

Zur Messung der Cellulosestabilität wurden 120 g Celluloselösung [bestehend aus 115,6g VE-Wasser, 3,3g Natrosol 250 MR (Hercules), 0,5g Dehydran 1620 (Cognis), 0,36g Acticide SPX (Thor), 0,24g 25%igen) Ammoniaklösung], mit 80g Dispersion gemäß der Referenzbeispiele 1 und 2 (Dispersion 1, Dispersion 2) und der in Tabelle angegebenen Menge an Additiv gemischt, und der Viskositätsabfall nach 7 Tagen bei 45°C wurde bestimmt (Brookfield-Viskosimeter, Spindel 3, 6, Upm, 23°C):

**Tabelle 3:**

| Viskositätsabfall in der Mischung mit Celluloseverdicker | | |
|---|---|---|
| Additiv | Dispersion 1 | Dispersion 2 |
| 0,1% HAC | 44 % | 46 % |
| 0,2% H₂O₂ | 90% | 90% |

Die übrigen Eigenschaften der Dispersionen blieben durch die Nachbehandlung unverändert.

Die Beispiele zeigen, dass die Zugabe von Agenzien, die mit Benzaldehyd zu Kondensationsprodukten reagieren, zu einer deutlich verringerten Konzentration an Benzaldehyd führt, ohne dass andere Eigenschaften der Polymerdispersionen dadurch negativ beeinflusst werden.

## Patentansprüche

1. Verfahren zur Herstellung einer geruchsarmen Polymerdispersion durch Polymerisation von Monomeren, die Monomere enthalten, die keton- oder aldehydfunktionelle Geruchsträger unter den Polymerisationsbedingungen bilden, in einem wässrigen Medium,
**dadurch gekennzeichnet, dass**
vor, während oder nach Beendigung der Polymerisation ein Reagenz zufügt wird, welches mit den keton- oder aldehydfunktionellen Geruchsträgern zu Additions- oder Kondensationsprodukten reagiert, wobei das Reagenz, falls es vor oder während der Polymerisation zugegeben wird, so ausgewählt wird, dass es sich bezüglich der Polymerisation inert verhält.

2. Verfahren nach Anspruch 1,
**dadurch gekennzeichnet, dass** das Reagenz nach Beendigung der Polymerisation zugegeben wird.

3. Verfahren nach einem der vorstehenden Ansprüche,
**dadurch gekennzeichnet, dass**
die in der Polymerisation eingesetzten Monomere Styrol enthalten und der keton- oder aldehydfunktionelle Geruchsträger Benzaldehyd ist.

4. Verfahren nach einem der Ansprüche 1 oder 2,
**dadurch gekennzeichnet, dass**
die in der Polymerisation eingesetzten Monomere Ester des Vinylalkohols enthalten und der keton- oder aldehydfunktionelle Geruchsträger Acetaldehyd ist.

5. Verfahren zur Verringerung der Konzentration von keton- oder aldehydfunktionellen Geruchsträgern in wässrigen Polymerdispersionen,
**dadurch gekennzeichnet, dass**
einer wässrigen Polymerdispersion, die einen Geruchsträger enthält, ein Reagenz zugefügt wird, welches mit dem keton- oder aldehydfunktionellen Geruchsträger zu Additions- oder Kondensationsprodukten reagiert

6. Verfahren nach Anspruch 4,
**dadurch gekennzeichnet, dass** der keton- oder aldehydfunktionelle Geruchsträger Benzaldehyd ist.

7. Verfahren nach Anspruch 4,
**dadurch gekennzeichnet, dass** der keton- oder aldehydfunktionelle Geruchsträger Acetaldehyd ist.

8. Verfahren nach einem der vorstehenden Ansprüche,
**dadurch gekennzeichnet, dass**
das Reagenz ausgewählt ist aus Alkoholen, Aminen, Hydrazinen und deren Derivate und Hydroxylaminen und deren Derivate.

9. Verfahren nach Anspruch 8,
**dadurch gekennzeichnet, dass**
das Reagenz ein Salz des Hydroxylamins, vorzugsweise Hydroxylaminsulfat, ist.

10. Verfahren nach Anspruch 8,
**dadurch gekennzeichnet, dass**
das Reagenz Adipinsäuredihydrazid ist.

11. Verfahren nach einem der vorstehenden Ansprüche,
**dadurch gekennzeichnet, dass**
das Additions- bzw. Kondensationsprodukt in der Polymerdispersion verbleibt.

12. Geruchsarme Polymerdispersion, erhältlich nach einem Verfahren gemäß Anspruch 11.

13. Verwendung der geruchsarmen Polymerdispersion nach Anspruch 12 als Bindemittel in Farben, Putzen, Mörteln, Fliesen- und Fußbodenklebern und Beschichtungen.
